# EUROPEAN PATENT SPECIFICATION

(11) **EP 0 872 365 B1**
(45) Date of publication and mention of the grant of the patent: **24.01.2001**
(21) Application number: 98106431.4
(22) Date of filing: 07.04.1998
(51) Int. Cl.: B60D 1/14, B60D 1/155

(54) **Lower arm for three-point coupling**
Unterlenker für Dreipunkt-Kupplung
Barre inférieure pour attelage à trois points

(30) Priority: 15.04.1997 IT BO970226
(43) Date of publication of application: 21.10.1998
(73) Proprietor: CBM S.p.A., 41100 Modena (IT)
(72) Inventor: Cornia, Enrico Maria, 41100 Modena (IT)
(74) Representative: Provvisionato, Paolo

(56) References cited:
- EP-A- 0 552 424
- FR-A- 2 363 023
- US-A- 2 925 287
- US-A- 5 152 118

## Description

The present invention relates to a lower arm for a three-point coupling of the type used, for example, in agricultural tractors for the connection of agricultural implements and the like.

The lower arm generally comprises a bar articulated to the tractor at one of its ends and having a device such as, for example, a quick-coupling hook or a ball joint for coupling to the agricultural implement at the other end. To facilitate the coupling of the implement to the lower arm, particularly when a ball joint is used, the lower arm may be of the so-called "telescopic" type comprising a box of variable shape which is welded to the bar and in which is mounted an appendage which can be pulled out selectively and which carries the coupling device at its end. The greater part of the appendage is normally retracted into the box and clamped by means of a pawl. The appendage can be released by action on the pawl and can then be pulled out and oriented so as to be coupled to the agricultural implement in the required position. To permit a wide margin of movement of the appendage in the released condition, it is necessary for it to be fairly long with the consequence that the region of the connection between the bar and the box housing the appendage is moved towards the region of the lower arm which is subject to the greatest bending stress.

A lower arm for a three-point coupling according to the preamble of claim 1 is known from FR-A-2 363 023.

Various solutions have been proposed for increasing the strength of the lower arm, amongst which is that of inserting and fixing a portion of bar inside the box to avoid the concentration of forces in the region in which the two elements are welded, but all of the known solutions are quite complex and expensive.

The object of the present invention is to improve the strength and reliability of a lower arm for three-point couplings, particularly but not exclusively of the telescopic type, with particular reference to the connection between the bar and the device for coupling to an agricultural implement. Another object of the invention is to provide a lower arm which can be produced easily and inexpensively.

To achieve the objects indicated above, the subject of the invention is a lower arm for three-point couplings having the characteristics indicated in Claim 1 below.

Further characteristics and advantages will become clear from the following description of a preferred embodiment given by way of non-limiting example, with reference to the appended drawings, in which:
Figure 1 is a perspective view of a telescopic lower arm formed in accordance with the present invention,
Figure 2 is a cross-section taken on the line II-II of Figure 1, on an enlarged scale,
Figure 3 is a partial side view of the lower arm taken on the arrow III of Figure 2, and
Figure 4 is a partial side view similar to that of Figure 3, of a variant of the lower arm according to the invention.

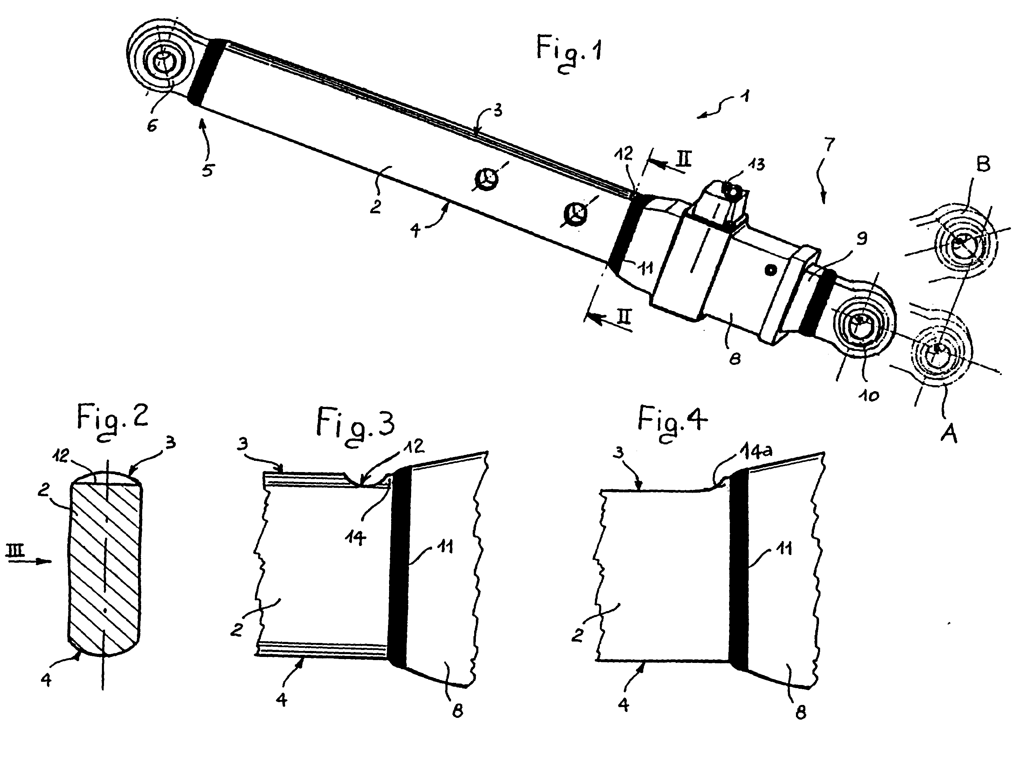

With reference now to Figures 1 to 3, a lower arm 1 for a three-point coupling comprises an elongate bar 2 having a rectangular cross-section of which the shorter, upper and lower sides 3 and 4 are convex. Naturally, the cross-section of the bar 2 may also have configurations other than that shown, which is given purely by way of example. A ball joint 6 for the articulation of the lower arm to a tractor is fixed, preferably welded, to one end 5 of the bar 2. Purely by way of example, the lower arm 1 shown in the drawings is of the telescopic type and comprises a coupling device 7 fixed to the other end of the bar 2. In particular, the coupling device 7 comprises a box structure 8 housing an appendage 9 which projects from the box structure 8 and terminates in a second ball joint 10 for coupling to an agricultural implement. The appendage 9 is restrained in the box structure 8 by means of a pawl 13 the release of which allows the appendage 9 to be pulled out almost completely and to be pivoted relative to the axis of the bar 2 so as to bring the ball joint 10 to a desired position, for example, to the position A or B shown in broken outline in Figure 1.

The coupling device 7 and, in particular, the box structure 8, is fixed to the bar 2 in a manner such that, when the appendage is in the retracted and clamped position, the centre of the ball joint 10 is arranged, like the centre of the ball joint 6, substantially on an extension of the axis of symmetry of the bar 2 so that the bending stresses on the lower arm are reduced to a minimum in use. In the simplest embodiment of the lower arm 1, the bar 2 and the box structure 8 are joined end to end and welded together by means of a weld seam 11. A depression, recess, or dent 12 preferably having an arcuate lateral profile, is formed in at least one face of the bar 2, and in particular, in its upper face 3 in the vicinity of the weld seam 11. The portion of the recess 12 facing towards the weld 11 defines a ridge or projection 14. The recess 12 is formed by mechanical machining with a machine tool, for example, by milling, or by press-forming or pressing, or even directly by casting, according to the method of manufacture of the bar 2. The wall of the recess 12, like the entire surface of the bar 2, is preferably subjected to a surface hardening treatment, for example, to peening.

If the bar 2 has a convex upper profile as shown in Figures 1 to 3, the maximum depth of the recess 12 preferably corresponds approximately to the depth of the convexity so as to have a more or less lenticular appearance. Again in a preferred but non-limiting embodiment of the invention, the arcuate profile of the recess 12 is an arc of a circle of relatively large radius, for example 2-3 times the maximum depth of the recess 12.

Figure 4 shows a variant of the configuration of the connecting region between the bar 2 and the box structure 8. In particular, the bar 2 has a projection or ridge 14a projecting relative to the upper face 3 of the bar 2 in the vicinity of the connecting region 11. The projection 14a is produced, for example, by upsetting, by machining with a machine tool, by forming, pressing, casting or by any known method.

In use, the lower arm 1 is connected to an agricultural tractor by means of the ball joint 6 and to an agricultural implement by means of the ball joint 10 which is then clamped inside the box structure 8. It has been found experimentally that the strength of the weld seam 11 and of the bar 2 in the vicinity of the weld seam, particularly the fatigue strength in the presence of bending stresses on the lower arm 1, is more than doubled in the presence of the recess 12 or of the projection 14a in comparison with a lower arm without such a recess, dent or projection.

Naturally, the principle described above with reference to a telescopic lower arm can also be applied to a lower arm comprising a different type of device for coupling to an agricultural implement, for example, comprising a quick-coupling hook.

As well as improving the strength of a lower arm, the present invention is also simple and inexpensive to implement since it can be integrated in the production cycle of known lower arms without particular difficulty. Moreover, the present invention does not require the use of complex connection systems between a bar and a corresponding coupling device or modification of the geometry of the box structures used in the production of telescopic lower arms.

Naturally, the principle of the invention remaining the same, the forms of embodiment and details of construction may be varied widely with respect to those described and illustrated purely by way of example, without thereby departing from the scope of the invention as defined in the claims.

## Claims

1. A lower arm for a three-point coupling comprising a coupling device (7) for an implement and a bar (2) connected rigidly to the coupling device (7) and comprising an upper wall (3), characterized in that the upper wall (3) of the bar (2) has a ridge or projection (14, 14a) in the vicinity of the connection (11) to the coupling device (7).

2. A lower arm according to Claim 1, characterized in that at least one recess or dent (12) is formed in the vicinity of the connection (11) to the coupling device (7), the ridge or projection (14) being defined by the portion of the recess or dent (12) facing the connection region (11).

3. A lower arm according to Claim 1, characterized in that the bar (2) and the coupling device (7) are joined end to end and welded, the ridge or projection (14, 14a) being formed in the vicinity of the weld seam (11).

4. A lower arm according to Claim 2, characterized in that the bar has a rectangular cross-section with convex upper and lower short sides (3 and 4), the recess or dent (12) having a maximum depth substantially corresponding to the depth of the convexity.

5. A lower arm according to Claim 1, characterized in that the recess or dent (12) has a lateral profile in the manner of an arc of a circle having a radius greater than the depth of the recess.

## Patentansprüche

1. Unterlenker für eine Drei-Punkt-Kupplung mit einer Kupplungsvorrichtung (7) für ein Arbeitsgerät und mit einer Stange (2), die starr mit der Kupplungsvorrichtung (7) verbunden ist und die eine obere Wandung (3) aufweist, **dadurch gekennzeichnet,** daß die obere Wandung (3) der Stange (2) eine Wulst oder einen Vorsprung (14, 14a) in der Nähe der Verbindung (11) zu der Kupplungsvorrichtung (7) aufweist.

2. Unterlenker gemäß Anspruch 1, **dadurch gekennzeichnet,** daß mindestens eine Ausnehmung oder Kerbe (12) in der Nähe der Verbindung (11) zu der Kupplungsvorrichtung (7) gebildet wird, wobei die Wulst oder der Vorsprung (14) durch den Abschnitt der Ausnehmung oder Kerbe (12) definiert ist, der dem Verbindungsbereich (11) zugewandt ist.

3. Unterlenker gemäß Anspruch 1, **dadurch gekennzeichnet,** daß die Stange (2) und die Kupplungsvorrichtung (7) an den Enden miteinander verbunden und verschweißt sind, wobei die Wulst oder der Vorsprung (14, 14a) in der Nähe der Schweißnaht (11) ausgebildet ist.

4. Unterlenker gemäß Anspruch 2, **dadurch gekennzeichnet,** daß die Stange einen rechteckigen Querschnitt mit konvexen oberen und unteren kurzen Seiten (3 und 4) aufweist, wobei die Ausnehmung oder Kerbe (12) eine maximale Tiefe aufweist, die im wesentlichen mit der Tiefe der Konvexität übereinstimmt.

5. Unterlenker gemäß Anspruch 1, **dadurch gekennzeichnet,** daß die Ausnehmung oder Kerbe (12) ein laterales Profil in der Art eines Bogens eines Kreises mit einem Radius größer als die Tiefe der Ausnehmung aufweist.

## Revendications

1. Bras inférieur pour un attelage à trois points comprenant un dispositif d'accouplement (7) pour un instrument et une barre (2) jointe de façon rigide au dispositif d'accouplement (7) et comprenant une paroi supérieure (3), caractérisé en ce que la paroi supérieure (3) de la barre (2) présente une nervure ou une saillie (14, 14a) au voisinage de la jonction (11) au dispositif d'accouplement (7).

2. Bras inférieur selon la revendication 1,
caractérisé en ce qu'au moins un évidement ou une entaille (12) est formé au voisinage de la jonction (11) au dispositif d'accouplement (7), la nervure ou la saillie (14) étant définie par la partie de l'évidement ou de l'entaille (12) tournée vers la région de jonction (11).

3. Bras inférieur selon la revendication 1,
caractérisé en ce que la barre (2) et le dispositif d'accouplement (7) sont joints bout à bout et soudés, la nervure ou la saillie (14, 14a) étant formée au voisinage du cordon de soudure (11).

4. Bras inférieur selon la revendication 2,
caractérisé en ce que la barre a une section transversale rectangulaire ayant des côtés courts supérieur et inférieur convexes (3 et 4), l'évidement ou l'entaille (12) ayant une profondeur maximale correspondant sensiblement à la profondeur de la convexité.

5. Bras inférieur selon la revendication 1,
caractérisé en ce que l'évidement ou l'entaille (12) a un profil latéral semblable à un arc de cercle ayant un rayon supérieur à la profondeur de l'évidement.
